# EUROPEAN PATENT APPLICATION

(11) **EP 1 536 262 A1**
(43) Date of publication of application: **01.06.2005**
(21) Application number: 04015668.9
(22) Date of filing: 02.07.2004
(51) Int. Cl.: G02B 6/44

(54) **Optical fiber cable and method of manufacturing therefor**

(30) Priority: 27.11.2003 KR 2003085069
(71) Applicant: Samsung Electronics Co., Ltd., Suwon-si, Gyeonggi-do (KR)
(72) Inventor: Lee, Ho-Soon Samsung Electronics Co., Ltd., Suwon-si Gyeonggi-do (KR); Hwang, Joon-Jin Samsung Electronics Co., Ltd., Suwon-si Gyeonggi-do (KR); Park, Kyung-Tae Samsung Electronics Co., Ltd., Suwon-si Gyeonggi-do (KR); Kang, Hee-Goo Samsung Electronics Co., Ltd., Suwon-si Gyeonggi-do (KR)
(74) Representative: Lang, Johannes, Dipl.-Ing.

(57) **Abstract**

An optical fiber cable and a method of fabricating the same are disclosed. The optical fiber cable includes at least one optical fiber including a core, which is an optical signal transmission medium, a clad surrounding an outer peripheral surface of the core, and a coating layer surrounding an outer peripheral surface of the clad. The optical fiber cable also includes an external sheath including a first layer having a predetermined thickness and a second layer made of polymer material and formed at an outer peripheral surface of the first layer through an extruding process and a waterproof member accommodated between the external sheath and the optical fibers. A plurality of recesses having a predetermined depth and a predetermined diameter are formed on the second layer.

## Description

### BACKGROUND OF THE INVENTION

### 1. Field of the invention

The present invention relates to an optical fiber cable, and more particularly to an optical fiber cable, installed using air pressure, and including an external sheath having a multi-layer structure.

### 2. Description of the Related Art

Conventional optical fibers includes a core made of glass material or plastic material having a high refractive index at a center portion thereof, a clad surrounding an outer surface of the core and having a refractive index lower than that of the core, and a coating layer coated on an outer surface of the clad in order to protect the core and the clad.

Such optical fibers provide an optical signal transmission medium capable of simultaneously transmitting a plurality of optical signals through one circuit. Such optical fibers can also be adapted digital data transmission. However, these optical fibers have low tensile strength due to a material characteristic thereof, so that they are easily damaged under certain external circumstances.

One attempt to solve the above-mentioned problems involves binding a plurality of optical fibers with tensile members. Such an optical fiber cable can be installed and can simultaneously provide a plurality of circuits. Generally, such an optical fiber cable may be installed through an air-blown installation method, which installs the optical fiber cable by blowing air into a buried duct.

The above-mentioned optical fiber cable is formed at an external sheath with a plurality of recesses having a crater shape in order to easily perform the air-blown installation. The above-mentioned recesses have a crater shape that are formed by spraying pressurized water towards the external sheath, which is being extruded.

However, it is difficult to control water pressure to be sprayed, and the recesses are irregularly formed as water flows through the external sheath. In addition, recesses having irregular depths and diameters cause deviation of air distribution applied to the optical fiber cable during the air-blown installation. This causes the optical fiber cable to be bent or damaged during the air-blown installation.

### SUMMARY OF THE INVENTION

One object of the present invention is to reduce the above-mentioned problems occurring in the prior art.

Another object of the present invention is to provide an optical fiber cable including an external sheath capable of reducing physical impact caused by irregularly formed recesses and having a plurality of recesses with uniform depth and diameter.

One embodiment of the present invention is directed to an optical fiber cable including at least one optical fiber having a core, which is an optical signal transmission medium, a clad surrounding an outer peripheral surface of the core, and a coating layer surrounding an outer peripheral surface of the clad. The optical fiber cable also includes an external sheath including a first layer having a predetermined thickness and a second layer made of polymer material and formed at an outer peripheral surface of the first layer through an extruding process, a plurality of recesses having a predetermined depth and a predetermined diameter being formed on the second layer; and a waterproof member accommodated between the external sheath and the optical fibers.

Another embodiment of the present invention is directed to a method for fabricating an optical fiber cable having at least one optical fiber. The method includes the step of binding the optical fibers by using a waterproof member, and forming an external sheath including a first layer having a predetermined thickness and formed at an outer surface of the waterproof member, which binds the optical fibers together, and a second layer formed onto an outer surface of the first layer in such a manner that a plurality of recesses are formed in the second layer.

### BRIEF DESCRIPTION OF THE DRAWINGS

The above object, features and embodiments of the present invention will be more apparent from the following detailed description taken in conjunction with the accompanying drawings, in which:
- FIG. 1: is a diagram showing an optical fiber cable including an external sheath having a multi-layer structure according to a first embodiment of the present invention;
- FIG. 2: is a side sectional view of the external sheath shown in FIG. 1;
- FIG. 3: is a graph showing a pressure difference between a conventional optical fiber cable including an external sheath and an optical fiber cable of the present invention as a function of a length of a duct when air pressure is applied to the optical fiber cable to install the optical fiber cable in the duct; and
- FIG. 4: is a diagram showing an optical fiber cable including an external sheath structure having a multi-layer structure formed with a ribbon optical fiber according to a second embodiment of the present invention.

### DETAILED DESCRIPTION

Hereinafter, an embodiment of the present invention will be described with reference to the accompanying drawings. In the following description and drawings, the same reference numerals are used to designate the same or similar components, and so repetition of the description on the same or similar components will be omitted.

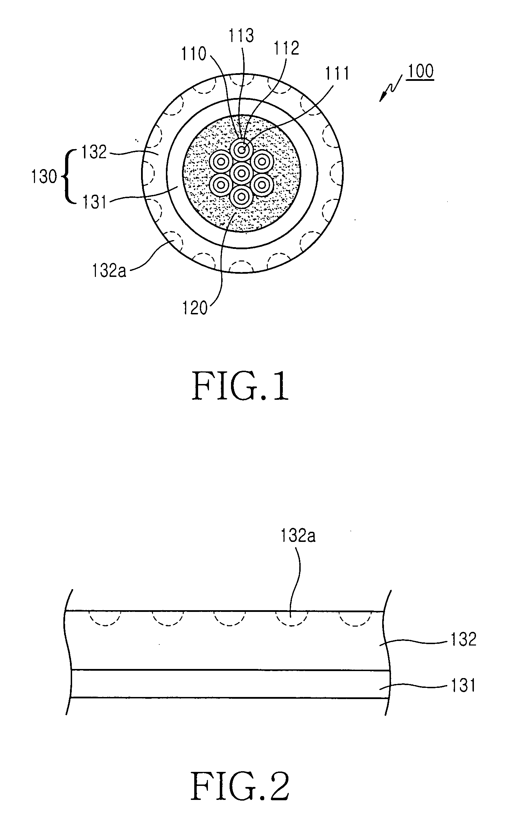

FIG. 1 is a diagram showing an optical fiber cable 100 including an external sheath having a multi-layer structure including a second layer formed with a crater according to a first embodiment of the present invention. The optical fiber cable 100 includes at least one optical fiber 110, an external sheath 130 binding optical fibers 110 together, and a waterproof member 120 for preventing moisture from penetrating into the optical fibers 110.

Each of the optical fibers 110 includes a core 111, which is an optical signal transmission medium, a clad 112 surrounding an outer surface of the core 111, and a coating layer 113 coated at an outer surface of the clad 112. In addition, each of optical fibers 110 further includes a colored layer for identifying the optical fibers by coating a specific color on the outer surface of the coating layer 113.

The core 111 includes a material capable of transmitting the optical signal. The core 111 is surrounded by the clad 112, which has a refractive index lower than that of the core 111, so that optical signals incident on the inside of the core 111 is reflected from the clad 112 so that the optical signals proceed to the interior of the core 111.

FIG. 2 is a side sectional view showing the external sheath shown in FIG. 1. Referring to FIG. 2, the external sheath 130 includes a first layer 131 having a uniform thickness and a second layer 132 formed at an outer peripheral surface of the first layer 131. The second layer 132 may be formed through an extruding process and having a plurality of recesses 132a with a predetermined depth and a predetermined diameter. The external sheath 130 binds optical fibers 110 and the waterproof member 120 together.

The first layer 131 is formed with a uniform thickness. The second layer 132 may be made of polymer material and formed through the extruding process in such a manner that the outer peripheral surface of the first layer 131 is surrounded by the second layer 132. The second layer 132 may include polymer material, such as foam polyethylene, polyolefin, PVC, and urethane. In addition, due to characteristic of such polymer materials, recesses 132a in the form of craters having a depth and a diameter in a range of 10 ∼ 500 µm are formed when performing the extruding process. Particularly, polymer can be formed with the recesses having the uniform depth and the uniform diameter by carrying out extruding process with respect to polymer under a relatively higher temperature condition, which may be in the range of 10 to 50°C higher than a general extruding temperature which does not make the recesses in polymer.

The waterproof member 120 may be accommodated between the first layer 131 of the external sheath 130 and the optical fibers 110 to prevent moisture from penetrating into optical fibers 110 and to reduce physical impact. The waterproof member 120 may include yam or similar substance.

Since the optical fiber cable 100 according to this embodiment of the present invention includes the external sheath 130 having the multi-layer structure (e.g., made of the polymer material). This can allow the optical fiber cable 100 to reduce the physical impact causing a deformation of the optical fiber cable 100, such as bending, generated when installing the optical fiber cable 100. The optical fiber cable 100 can form recesses 132a having the uniform depth and the uniform diameter on the external sheath 130 when extruding the external sheath 130 according to the temperature applied to polymer. One aspect of the above-mentioned recesses 132a allows the optical fiber cable 100 to be installed through an air-blown installation.

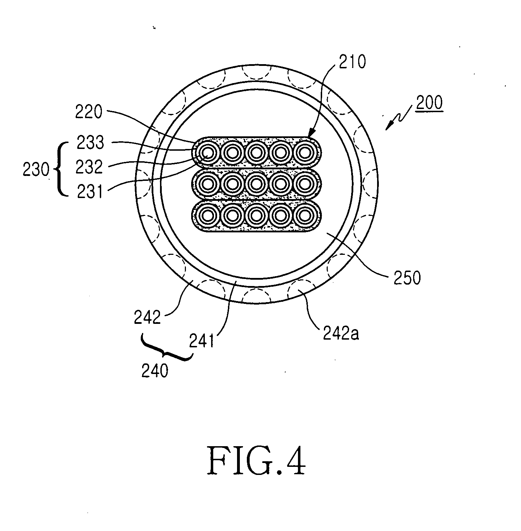

FIG. 4 is a diagram showing an optical fiber cable 200 including an external sheath structure having a multi-layer structure formed with a ribbon optical fiber according to a second embodiment of the present invention. The optical fiber cable 200 includes at least one ribbon optical fiber 210, an external sheath 240 for binding the ribbon optical fibers 210 together, and a waterproof member 250 formed between the external sheath 240 and the ribbon optical fibers 210.

Each of ribbon optical fibers 210 includes a plurality of optical fibers 230 aligned in line with each other and a ribbon coating layer 220 surrounding an outer surfaces of the optical fibers 230 in order to bind optical fibers 230 together. Also, each of the optical fibers 230 includes a core 231, which is an optical signal transmission medium, a clad 232 surrounding the core 231, and a coating layer 233 surrounding an outer surface of the clad 232.

Predetermined colors may be coated to the ribbon coating layer 220 in order to identify each of the optical fibers 230. The ribbon coating layer 220 includes an ultraviolet curing agent, and the ribbon optical fibers 210 can be accommodated in the optical fiber cable 200 in the form of a ribbon optical fiber bundle including a plurality of stacked optical fibers.

The external sheath 240 includes a first layer 241 binding the ribbon optical fibers 210 together and having a uniform thickness, and a second layer 242 made of a polymer material and formed at the outer surface of the first layer 241 through an extruding process. In addition, recesses 242a having uniform sizes are formed on the second layer 242.

The first layer 241 has the uniform thickness. The second layer 242 may be formed on the outer surface of the first layer 241 by extruding polymer, such as foam polyethylene, polyolefin and PVC, on the outer surface of the first layer 241 under a relatively higher temperature condition, which may be in the range of 10 to 50°C higher than a general extruding temperature, so that a plurality of recesses 242 having uniform diameter and depth are formed in the second layer 222.

The general extruding temperature signifies a temperature, which does not make bubbles in polymer. Since polymer is subject to the extruding process at a temperature above the general extruding temperature, the recesses having the uniform size can be formed in the second layer 242. The size of the recesses 242a formed in the second layer 242 can be adjusted by controlling the extruding temperature.

For instance, PVC has the general extruding temperature in a range of 150 to 190°C, polyethylene has the general extruding temperature in a range of 180∼230 °C, and elastomer based material, such as nylon, PBT and polyester, has the general extruding temperature in a range of 185∼270°C.

Such general extruding temperatures can be varied according to materials of the external sheath, a length of the optical fiber cable to be fabricated, working environment, or working devices, such as an extruder.

In addition to the optical fiber cable having the above-mentioned structure, an optical fiber cable having a loose tube structure including a plurality of loose tubes for binding a plurality of optical fibers together, and a ribbon optical fiber cable including ribbon optical fibers can be used according to other embodiments of the present invention.

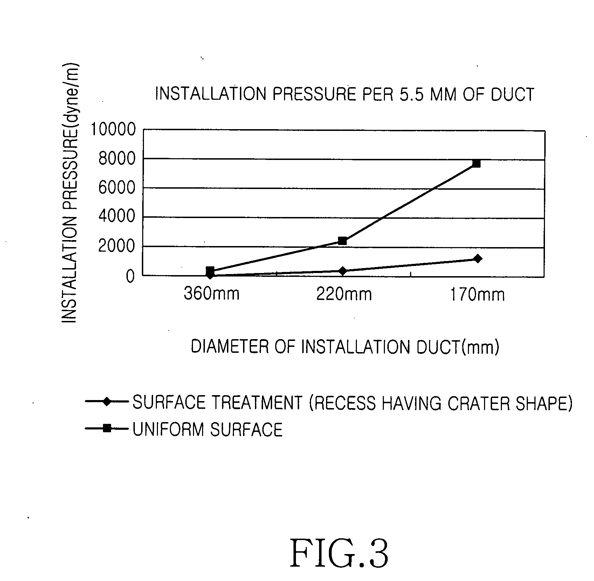

FIG. 3 is a graph showing the pressure difference between a conventional optical fiber cable including an external sheath and an optical fiber cable according to embodiments of the present invention as a function of a length of a duct when air pressure is applied to the optical fiber cable to install the optical fiber cable in the duct. Referring to FIG. 3, the optical fiber cable formed at an outer surface thereof with recesses having a crater shape can be installed under air pressure less than 2,000 dyne/m even if a diameter of an installation duct for installing the optical fiber cable becomes reduced. In the conventional optical fiber cable, which is not formed with recesses having the crater shape, air pressure required for installing the optical fiber cable may suddenly increase from 2,000 dyne/m to 8,000 dyne/m when a diameter of the installation duct becomes reduced to in a range of 220 ∼ 170 mm.

As mentioned above, the optical fiber cable according to embodiments of the present invention includes the external sheath having the layer formed at the outer surface thereof with the recesses having the crater shape and the layer having the uniform thickness, so that the air-blown installation can be more easily carried out as compared to conventional methods. This should prevent the optical fiber cable from being bent. In addition, the optical fibers or the optical fiber cables according to embodiments of the present invention can be installed with a longer installation length as compared to conventional methods when the air-blown installation for the optical fiber cables is carried out.

Although embodiments of the present invention have been described for illustrative purposes, those skilled in the art will appreciate that various modifications, additions and substitutions are possible, without departing from the scope and spirit of the invention as disclosed in the accompanying claims.

## Claims

1. An optical fiber cable comprising:
at least one optical fiber including a core, a clad surrounding an outer peripheral surface of the core, and a coating layer surrounding an outer peripheral surface of the clad, and
an external sheath including a first layer having a predetermined thickness and a second layer made of polymer material at an outer peripheral surface of the first layer, the second layer having a plurality of recesses formed
thereon.

2. The optical fiber cable according to claim 1, wherein the second layer is formed through an extruding process.

3. The optical fiber cable according to claim 2, wherein the plurality of recesses have a predetermined depth and a predetermined diameter.

4. The optical fiber cable according to claim 1 further comprising a waterproof member accommodated between the external sheath and the optical fibers.

5. The optical fiber cable according to claim 2, wherein the second layer is a polymer layer including foam polyethylene, polyolefin, or PVC.

6. The optical fiber cable according to claim 5, wherein the plurality of recesses have a crater shape with a depth and a diameter in a range of 10 ∼ 500 µm.

7. The optical fiber cable according to claim 4, wherein the waterproof member accommodated between the first layer and the optical fibers includes yarn.

8. A ribbon optical fiber cable comprising;
at least one ribbon optical fiber including a plurality of optical fibers aligned in line with each other and a ribbon coating layer surrounding an outer surface of the optical fibers in order to bind optical fibers together;
an external sheath including a first layer having a predetermined thickness and a second layer made of polymer material and formed at an outer peripheral surface of the first layer, the second layer having a plurality of recesses formed thereon; and
a waterproof member filled between the external sheath and the ribbon optical fibers.

9. The ribbon optical fiber cable according to claim 8, wherein the plurality of recesses have a predetermined depth and a predetermined diameter.

10. The ribbon optical fiber cable according to claim 8, wherein the ribbon coating layer includes an ultraviolet curing agent.

11. The ribbon optical fiber cable according to claim 8, wherein the second layer is formed at an outer surface thereof with the plurality of recesses having a crater shape with a depth and a diameter in a range of 10 ∼ 500 µm.

12. The ribbon optical fiber cable according to claim 8, wherein the second layer is a polymer layer including foam polyethylene or foam polymer.

13. The ribbon optical fiber cable according to claim 8, wherein the waterproof member includes yarn.

14. A method for fabricating an optical fiber cable having at least one optical fiber, the method comprising the steps of;
binding the optical fibers by using a waterproof member; and
forming an external sheath including a first layer having a predetermined thickness and formed at an outer surface of the waterproof member, which binds the optical fibers together, and a second layer formed onto an outer surface of the first layer in such a manner that a plurality of recesses are formed in the second layer.

15. The method according to claim 14, wherein the second layer is formed by an extruding a polymer material.

16. The method according to claim 15, wherein the second layer is formed by extruding the polymer material under a relatively higher temperature condition, which is 10 to 50°C higher than a general extruding temperature, so the plurality of recesses have a crater shape and a uniform size are formed in the second layer due to bubble generated in the polymer material.

17. The method according to claim 15, wherein the size and the shape of the plurality of recesses formed at the second layer are adjusted according to the extruding temperature.
